# EUROPÄISCHE PATENTANMELDUNG

(11) **EP 3 263 493 A1**
(43) Veröffentlichungstag der Anmeldung: **03.01.2018**
(21) Anmeldenummer: 17175991.3
(22) Anmeldetag: 14.06.2017
(51) Int. Cl.: B65G 1/08

(54) **DURCHLAUFREGAL ZUM KOMMISSIONIEREN VON LAGEREINHEITEN**

(30) Priorität: 30.06.2016 DE 102016211806
(71) Anmelder: BITO-Lagertechnik Bittmann GmbH, 55590 Meisenheim (DE)
(72) Erfinder: GASSNER, Okten, 55571 Odernheim (DE); KEMPERDICK, Artur, 55758 Niederwörresbach (DE)
(74) Vertreter: Richardt Patentanwälte PartG mbB

(57) **Zusammenfassung**

1. Die Erfindung betrifft ein Durchlaufregal (100) zum Kommissionieren von Lagereinheiten (112), wobei das Durchlaufregal (100) aufweist:
- Eine von einer Aufgabeseite (108) zur einer Entnahmeseite (110) des Durchlaufregals hin geneigte Laufbahn (102) für die Lagereinheiten (112), wobei die Laufbahn (102) dazu ausgebildet ist, dass sich unter Schwerkrafteinfluss die Lagereinheiten (112) auf der Laufbahn (102) zur Entnahmeseite (110) hin bewegen,
- Eine Rückhaltesicherung (118), durch die eine der Lagereinheiten (112) in einer Warteposition (116) gegen eine weitere Bewegung in Richtung zur Entnahmeseite (110) hin blockierbar ist, wobei die Rückhaltesicherung (118) einen verschwenkbaren Hebel (400) und ein verschwenkbares Arretierelement (402) aufweist, wobei das Arretierelement (402) ein bezüglich des Arretierelements (402) starres Anschlagelement (404) und der Hebel (400) eine bezüglich des Hebels (400) starre Anschlagfläche (406) für das Anschlagelement (404) aufweist, wobei das Arretierelement (402) und der Hebel (400) so ausgebildet sind, dass in der Warteposition (116) die Anschlagfläche (406) des durch die eine Lagereinheit (112) belasteten Hebels (400) einen Anschlag für das Anschlagelement (404) bildet und die Lagereinheit (112) durch das Arretierelement (402) in der Warteposition (116) gegen die weitere Bewegung blockiert ist.

## Beschreibung

Die Erfindung betrifft ein Durchlaufregal zum Kommissionieren von Lagereinheiten sowie eine Rückhaltesicherung für ein Durchlaufregal zum Kommissionieren von Lagereinheiten.

Durchlaufregale dienen dem Zweck des Beförderns von Lagereinheiten von einer Aufgabeseite zu einer Entnahmeseite, wobei vorzugsweise die Lagereinheiten unter Schwerkrafteinfluss selbständig von der Aufgabeseite zur Entnahmeseite gelangen. Typischerweise weist dabei das Durchlaufregal zwei zueinander parallel verlaufende Laufbahnen auf, welche beispielsweise mit Röllchen ausgestattet sind, über welche die Lagereinheiten von der Aufgabeseite zur Entnahmeseite schwerkraftbedingt rollen können.

Eine Art des Kommissionierens besteht zum Beispiel darin, dass Artikel beinhaltende Lagereinheiten wie Lagerkästen auf der Aufgabeseite auf die Laufbahn aufgesetzt werden, um daraufhin selbständig zur Entnahmeseite des Durchlaufregals hin zu laufen. Auf der Entnahmeseite werden die Artikel teilweise oder vollständig dem Behälter entnommen. Daraufhin wird der teilweise oder vollständig entleerte Behälter zurück entgegen der eigentlichen Laufrichtung in eine Warteposition zurückgeschoben, um dort von einem Gerät wie beispielsweise einem Regalförderzeug von der Laufbahn entfernt zu werden. Damit der Behälter in der Warteposition verharrt und nicht zurück auf die Entnahmeseite des Durchlaufregals zurückrollt, ist im Bereich der Warteposition eine Rückhaltesicherung vorgesehen.

Beispielsweise beschreibt die EP 1 151 941 B1 ein Durchlaufregal zum Kommissionieren von Lagereinheiten mit mindestens zwei parallel zueinander angeordneten Röllchenbahnen, wobei mindestens eine der Röllchenbahnen eine Sperreinrichtung aufweist, durch die eine Lagereinheit in einer der Entnahmeposition in Laufrichtung vorgelagerten Warteposition arretiert ist, wobei die Sperreinrichtung eine um eine Achse in gegensinnigen Richtungen verschwenkbaren Hebel mit zwei winklig zueinander angeordneten Schenkeln umfasst. Dabei weist einer der beiden Schenkel ein winklig dazu verlaufendes Bein auf, wobei das Bein eine Öffnung zur Aufnahme der Schwenkachse aufweist, wobei der Öffnung nachgeordnet ein Gewicht als Mittel zum Aufstülpen des Hebels vorgesehen ist, wobei die Lagereinheit in der Warteposition durch den die beiden Schenkel gebildeten Sitz gehalten ist, sodass der andere der beiden Schenkel im Zusammenspiel mit der Lagereinheit das Aufstellen des Hebels verhindert.

Auch die DE 198 29 258 A1 offenbart ein Durchlaufregal zum Kommissionieren von Lagereinheiten mit einer Rückhaltesicherung.

DE 3 037 634 A1 (Dokument 1) offenbart ein Regal zum Transport von Paletten, dadurch gekennzeichnet, dass es zum Transport mit einer Vorschubstange versehen ist, die um eine Drehachse beidseitig in Richtung der Vorschubstangenbewegung bewegliche Palettenmitnehmer hat, die durch eine aufgezwungene Kraft nach der Neigung, sei es in die eine oder die andere Richtung, in die aufrechte Lage schwingen, und dass diese Mitnehmer über verschiebbare Anschläge blockierbar oder freigebbar sind.

DE 2002 05 95 U1 (Dokument 2) offenbart ein Durchlaufregal für Kommissionierzwecke mit vorzugsweise in mehreren Ebenen übereinander angeordneten und zur Kommissionierseite hin geneigten Laufbahnen, auf denen Lagereinheiten unter Schwerkrafteinfluss von der Beschickungsseite her bis in eine Entnahmeposition gelangen, und mit jeweils mindestens einem an den Laufbahnen angeordneten Rückhaltelement zum Zurückhalten einer Lagereinheit in eine der Entnahmeposition in Bewegungsrichtung vorangelagerten Position, wobei das Rückhaltelement auf einer ortsfesten Drehachse gelagert entgegen einer Rückstellkraft aus einer Grundstellung heraus in gegensinnige Schwenkrichtungen auslenkbar ist.

DE 10 2010 031 223 B4 (Dokument 3) offenbart eine Rückhaltesicherung für ein Lagergut in einem Durchlaufregal mit einem Pendelkörper zum Pendeln um eine Pendelachse und mit Auslenkmitteln zum Auslenken des Pendelkörpers aus einer Ruheposition durch das Lagergut.

DE 20 2014 006 772 U1 (Dokument 4) offenbart eine Förderbahn mit wenigstens einem in eine Förderrichtung erstreckenden Träger, wobei der Träger eine erste und eine gegenüberliegende zweite Seitenwand aufweist, an die jeweils eine Vielzahl voneinander paarweise gegenüberliegenden ersten und zweiten Achsen Aufnahmen entlang der Förderrichtung angeordnet sind, wobei in zumindest einem Teil der gegenüberliegenden ersten und zweiten Achsenaufnahmen jeweils eine gesonderte Achse gehalten ist, wobei an zumindest einem Teil der Achsen eine gesonderte Rolle drehbar gelagert ist, welche nach oben über den Träger übersteht, wobei die Rollen eine Förderebene definieren, dadurch gekennzeichnet, dass an zumindest eine Achse ein Sperrstück drehbar gelagert ist, wobei das Sperrstück so ausgebildet ist, dass es in einer ersten Drehbewegung über die Förderebene übersteht, wobei es in einer zweiten Drehbewegung vollständig auf der Seite der Förderebene angeordnet ist, auf der sich der Träger befindet.

DE 10 2005 048 836 A1 (Dokument 5) offenbart ein Durchlaufregal zur Kommissionierung von Lagereinheiten, welches wenigstens eine von der Beschickungsseite zu einer Kommissionierseite hin nach unten geneigten Laufbahn, deren Laufflächenebene von Rollen gebildet wird, und eine der Laufbahn zugeordnete Rücklaufsperre umfasst. Die Rücklaufsperre umfasst einen zweiarmigen Hebel, der aus einer Ruhestellung, in der sein erster Hebelarm über die Laufflächenebene vorsteht, gegen eine Rückstellkraft in zwei Richtungen unter die Laufflächenebene verschwenkbar ist, und einen Abstand zu dem zweiarmigen Hebel unter der Laufflächenebene verschwenkbar gelagertes Schwenkteil, das eine der Laufflächenebene von unten zugewandte Reibfläche aufweist.

US 2012/0247916 A1 (Dokument 6) offenbart ein Fließbandmodul mit Rollen, welches wenigstens ein Gestell und eine an dem Gestell befestigte Mehrzahl von Rollen umfasst, wobei die obere Seite der Mehrzahl der Rollen eine frachttragende Ebene definiert.

Der Erfindung liegt die Aufgabe zugrunde, ein verbessertes Durchlaufregal und eine verbesserte Rückhaltesicherung zu schaffen. Die der Erfindung zugrundeliegenden Aufgaben werden durch die Merkmale der unabhängigen Patentansprüche gelöst. Bevorzugte Ausführungsformen der Erfindung sind in den abhängigen Patentansprüchen angegeben.

Es wird ein Durchlaufregal zum Kommissionieren von Lagereinheiten beschrieben, wobei das Durchlaufregal eine von einer Aufgabeseite zu einer Entnahmeseite des Durchlaufregals hingeneigte Laufbahn für die Lagereinheiten aufweist, wobei die Laufbahn dazu ausgebildet ist, dass sich unter Schwerkrafteinfluss die Lagereinheiten auf der Laufbahn zur Entnahmeseite hin bewegen. Ferner weist das Durchlaufregal eine Rückhaltesicherung auf, durch die eine der Lagereinheiten in einer Warteposition gegen eine weitere Bewegung in Richtung zur Entnahmeseite hin blockierbar ist. Die Warteposition ist der Entnahmeseite in Richtung der Aufgabeseite vorgelagert. Die Rückhaltesicherung weist einen verschwenkbaren Hebel und ein verschwenkbares Arretierelement auf, wobei das Arretierelement ein bezüglich des Arretierelements starres Anschlagelement und der Hebel eine bezüglich des Hebels starre Anschlagfläche für das Anschlagelement aufweist, wobei das Arretierelement und der Hebel so ausgebildet sind, dass in der Warteposition die Anschlagfläche des durch die eine Lagereinheit belasteten Hebels einen Anschlag für das Anschlagelement bildet und die Lagereinheit durch das Arretierelement in der Warteposition gegen die weitere Bewegung blockiert ist.

Im Rahmen der Beschreibung wird der Begriff Laufbahn so verstanden, dass hiermit jegliche Förderbahn verstanden wird, auf welcher die Lagereinheiten unter Schwerkrafteinfluss in Richtung zur Entnahmeseite hin bewegen. Die Laufbahn kann hierzu Röllchen, größere Laufrollen oder auch zumindest teilweise sogar motorisch angetriebene Laufrollen aufweisen. Ferner kann die Laufbahn eine oder mehrere parallele Bahnen mit den Röllchen oder Rollen umfassen, welche die Lagereinheiten tragen.

Die Lagereinheiten können Kisten, Paletten und beliebiges Fördergut umfassen.

Ausführungsformen der Erfindung könnten den Vorteil haben, dass auf kompakte Art und Weise eine Rückhaltesicherung geschaffen wird, welche zuverlässig ihren Dienst verrichtet, ohne dass insbesondere aufgrund komplizierter mechanischer Kopplungen mit einer Fehlfunktion zu rechnen ist. Im Zustand des durch die eine Lagereinheit in Schwerkraftrichtung belastenden Hebels kann das Arretierelement um seine Achse höchstens so weit rotieren, bis das Anschlagelement an der Anschlagfläche aufliegt und aufgrund des so gebildeten Anschlags nicht weiter um seine Achse rotierbar ist. Das Arretierelement bildet so einen Rückhalt für die Lagereinheit und hindert diese an einer weiteren Bewegung in Richtung zur Entnahmeseite hin. Dadurch wird durch die Lagereinheit jene Warteposition eingenommen, in welcher die Lagereinheit durch das Arretierelement gegen die weitere Bewegung in Richtung der Entnahmeseite blockiert ist.

Nach einer Ausführungsform der Erfindung weist das Durchlaufregal ferner ein erstes Rückstellelement für den Hebel auf, wobei das erste Rückstellelement dazu ausgebildet ist, den Hebel in unbelastetem Zustand in eine Position zu verschwenken, in welcher der Hebel in den durch die Laufbahn definierten Laufweg der auf der Laufbahn bewegbaren Lagereinheiten hineinragt. Ferner weist das Durchlaufregal ein zweites Rückstellelement für das Arretierelement auf, wobei das zweite Rückstellelement dazu ausgebildet ist, das Arretierelement im unbelasteten Zustand in eine Position zu verschwenken, in welcher das Arretierelement in den durch die Laufbahn gebildeten Laufweg der auf der Laufbahn bewegbaren Lagereinheiten hineinragt.

Das erste und zweite Rückstellelement sorgen damit für den Hebel bzw. das Arretierelement dafür, dass Hebel bzw. Arretierelement selbständig im unbelasteten Zustand in den Laufweg der Lagereinheiten hineinschwenken und daraufhin in diesen Laufweg hineinragen. Eine in Richtung zur Entnahmeseite sich bewegende Lagereinheit wird daraufhin sowohl das Arretierelement als auch den Hebel in Richtung zu der Entnahmeseite weisend rotieren, sodass aufgrund der Rotation daraufhin sowohl Hebel als auch Arretierelement nicht mehr in den Laufweg hineinragen und damit der Laufweg für die Lagereinheit in Richtung Entnahmeseite frei ist. Sobald Hebel bzw. Arretierelement wieder frei sind von der Belastung durch die Lagereinheit, nehmen Hebel bzw. Arretierelement wieder selbständig jene in den Laufweg hineinragende Position ein.

Nach einer Ausführungsform der Erfindung umfasst das erste Rückstellelement ein Gewicht zum schwerkraftbedingten Verschwenken des Hebels oder eine Feder zum Verschwenken des Hebels in die Position, in welcher der Hebel in den durch die Laufbahn definierten Laufweg der auf der Laufbahn bewegbaren Lagereinheiten hineinragt. Das zweite Rückstellelement umfasst ein Gewicht zum schwerkraftbedingten Verschwenken des Arretierelements oder eine Feder zum Verschwenken des Arretierelements in die Position, in welcher das Arretierelement in den durch die Laufbahn gebildeten Laufweg der auf der Laufbahn bewegbaren Lagereinheiten hineinragt. Die Verwendung von Gewichten könnte den Vorteil haben, dass eine mechanische Fehleranfälligkeit der Rückhaltesicherung, wie sie insbesondere durch ausgeleierte Federn resultieren könnte, minimiert wird.

Es ist nach einer Ausführungsform der Erfindung auch möglich, dass das zweite Rückstellelement eine zwischen dem Hebel und dem Arretierelement angeordnete Feder umfasst. Dies könnte den Vorteil haben, dass im Falle dessen der Hebel und das Arretierelement in den Laufweg hineinragen mit Beginn des Verschwenkens des Hebels in Richtung der Entnahmeseite aufgrund der Federkopplung auch das Arretierelement diese Bewegung durchführt. Damit könnte es nicht zwingend notwendig sein, dass zum Zweck des Überführens der Lagereinheiten auf die Entnahmeseite und dem entsprechenden Verschwenken von Hebel und Arretierelement aus der in den Laufweg hineinragenden Position sowohl Arretierelement als auch Hebel gemeinsam in mechanischem Kontakt zur Lagereinheit geraten müssen. Es könnte hier genügen, dass lediglich der Hebel in Kontakt mit der Lagereinheit tritt, sodass ein eventuelles Risiko eines Verkantens der Lagereinheit mit dem Arretierelement minimiert wird.

Nach einer Ausführungsform der Erfindung sind der Hebel und das Arretierelement aus der Position, in welcher sie in den Laufweg hineinragen, durch die in Richtung der Entnahmeseite hinbewegte Lagereinheit in eine Position verschwenkbar, in welcher der Laufweg in Richtung der Entnahmeseite hin für die Lagereinheit freigegeben ist. Damit kann die Lagereinheit von der Aufgabeseite zur Entnahmeseite ohne ein Blockieren durch die Rückhaltesicherung zur Entnahmeseite hin gelangen, um dort beispielsweise von einem Kommissionierer verarbeitet zu werden.

Nach einer Ausführungsform der Erfindung sind der Hebel und das Arretierelement jeweils, insbesondere in gegensinnigen Richtungen, um eine ortsfeste gemeinsame Drehachse verschwenkbar. Die Drehachse ist dabei vorzugsweise an der Laufbahn selbst angeordnet. Die Verwendung einer ortsfesten gemeinsamen Drehachse könnte den Vorteil haben, dass hier der mechanische Aufbau vereinfacht wird, da sowohl die geometrische Dimensionierung als auch der mechanische Aufbau von Hebel und Arretierelement bzw. der Rückhaltesicherung allgemein vereinfacht werden könnte. Eine einzelne gemeinsame ortsfeste Drehachse könnte ferner den Vorteil haben, dass die Rückhaltesicherung dadurch einfacher, billiger und auch wartungsärmer in ihrem Aufbau ist.

Nach einer Ausführungsform der Erfindung ist das Arretierelement dazu ausgebildet, in der Warteposition der Lagereinheit eine Blockierstellung gegen die weitere Bewegung der Lagereinheit in Richtung der Entnahmeseite einzunehmen und im Zustand des durch die eine Lagereinheit belasteten Hebels von einer Freigabeposition in die Blockierposition zu schwenken, wobei in der Freigabeposition eine Bewegung der Lagereinheit in Richtung zur Aufgabeseite hin durch das Arretierelement freigegeben ist. Wenn also die Lagereinheit von der Entnahmeseite hin zur Aufgabeseite über die Rückhaltesicherung bewegt wird, werden zunächst Arretierelement und Hebel gemeinsam in Richtung der Aufgabeseite hin rotiert und von der Lagereinheit "überrollt". Sobald das Arretierelement nicht mehr durch die Lagereinheit in Schwerkraftrichtung belastet ist, schwenkt das Arretierelement von seiner zuvor eingenommenen Freigabeposition zurück in die Blockierstellung. Da jedoch nach wie vor der Hebel in Schwerkraftrichtung von der Lagereinheit belastet ist, bildet nun die Anschlagfläche des durch die Lagereinheit belasteten Hebels einen Anschlag für das Anschlagelement des Arretierelements, sodass das Arretierelement nicht weiter in Richtung zur Entnahmeseite rotieren kann. Drückt nun die Lagereinheit in Richtung der Entnahmeseite gesehen auf das Arretierelement, so blockiert das Arretierelement eine weitere Bewegung. Die Lagereinheit nimmt ihre Warteposition ein.

Nach einer Ausführungsform der Erfindung ist in einem Zustand des durch die eine Lagereinheit schwerkraftbedingt in Richtung der Schwerkraft belasteten Hebels und Arretierelements in der Erstreckungsrichtung der Laufbahn in Richtung der Aufgabeposition gesehen der Hebel länger als das Arretierelement.

Sobald das Arretierelement nicht mehr in Richtung der Schwerkraft durch die Lagereinheit belastet ist, kann dennoch der Hebel aufgrund der längeren Bauweise des Hebels als des Arretierelements durch die Lagereinheit nach unten (in Schwerkraftrichtung) gedrückt verbleiben, sodass nun das Arretierelement um seine Achse in die Blockierstellung zurückschwenken kann. Bewegt sich nun die Lagereinheit wieder zurück in Richtung Entnahmeposition, verbleibt der Hebel in seiner nach unten gedrückten Position und die Lagereinheit kann ihre Warteposition einnehmen.

Nach einer Ausführungsform der Erfindung weist der Hebel einen ersten Arm und das Arretierelement einen zweiten Arm auf, wobei das Arretierelement und der Hebel so ausgebildet sind, dass in der Warteposition der erste Arm in Richtung der Schwerkraft durch die eine Lagereinheit belastet ist und der zweite Arm in Richtung der Hangabtriebskraft durch die eine Lagereinheit belastet ist. Die Hangabtriebskraft wirkt dabei in Richtung von der Aufgabeseite zur Entnahmeseite hin.

Nach einer Ausführungsform stehen in der Warteposition der erste Arm und der zweite Arm in einem vordefinierten Winkel größer als 45° aufeinander. Vorzugsweise bilden in der Warteposition der erste und der zweite Arm eine L-Form, das heißt einen Winkel von annähernd 90°.

Nach einer Ausführungsform der Erfindung weist die Laufbahn zumindest unmittelbar an die Rückhaltesicherung angrenzende Laufrollen zum Tragen und Befördern der Lagereinheit auf, wobei der Hebel um eine Achse verschwenkbar ist, wobei in der Richtung der Achse in der Warteposition gesehen der erste Arm seitlich beabstandet zumindest zu den unmittelbar angrenzenden Laufrollen ist. Dies könnte den Vorteil haben, dass der erste Arm mit seiner Oberseite an jene Ebene unmittelbar angrenzt, welche die Lauffläche für die Lagereinheiten bildet. Damit bilden die Laufrollen auch in der Warteposition jene Elemente, welche die Traglast der Lagereinheit aufnehmen können und dem Hebel kommt lediglich eine mechanische "Schaltfunktion" zu, ohne dass der Hebel jedoch in der Schwerkraftrichtung gesehen hohe mechanische Lasten tragen müsste. Damit könnte im Hinblick auf die mechanische Belastbarkeit die Rückhaltesicherung insgesamt mechanisch einfacher ausgelegt werden. Außerdem könnte die mechanische Haltbarkeit der Rückhaltesicherung damit weiter gesteigert werden.

Aufgrund der seitlichen Beabstandung des ersten Armes von den Laufrollen findet also beim Verschwenken des Hebels bzw. dessen ersten Arms keine Kollision zwischen Laufrollen und erstem Arm statt.

Nach einer Ausführungsform der Erfindung ist der Hebel um eine Achse verschwenkbar, wobei der erste Arm in der Warteposition gesehen in der Erstreckungsrichtung der Laufbahn eine Auflauframpe aufweist, wobei die Höhe der Rampe in der Erstreckungsrichtung der Laufbahn gesehen von der Achse weg gerichtet zunimmt. Damit könnte gewährleistet werden, dass zum Beispiel ein Verkanten von Hebel und Lagereinheit vermieden wird und die Lagereinheit gleichmäßig von der Entnahmeposition kommend auf den Hebel aufläuft und diesen nach unten drückt.

Nach einer Ausführungsform ist der Hebel um eine Drehachse verschwenkbar, wobei der Hebel zwei über die Drehachse miteinander verbundene und voneinander beabstandete Hebelelemente umfasst. Die beiden Hebelelemente sind dabei in Erstreckungsrichtung der Drehachse voneinander beabstandet. Die Hebelelemente sind in axialer Richtung der Drehachse gesehen zusammen zentriert zur Laufbahn angeordnet und an einer von der Drehachse senkrecht beabstandeten Position miteinander starr über einen Querverbinder miteinander verbunden.

Auch dies könnte den Vorteil haben, dass die auf den Hebel wirkenden Kräfte gleichmäßig auf die Drehachse verteilt werden, sodass insgesamt ein Verkanten des Hebels vermieden wird.

Nach einer Ausführungsform der Erfindung endet im Zustand des in Schwerkraftrichtung belasteten Hebels und Arretierelements in der Erstreckungsrichtung der Laufbahn in Richtung der Aufgabeseite gesehen die Erstreckung des Arretierelements vor dem Querverbinder. Damit könnte es möglich sein, dass beim Überführen der Lagereinheit von der Entnahmeseite über die Warteposition hinaus in Richtung Aufgabeseite das Arretierelement vollständig zwischen die beiden voneinander beabstandeten Hebelelemente hindurchtauchen kann, ohne von diesen oder insbesondere dem Querverbinder blockiert zu werden. Damit ist der Bewegungsvorgang der Lagereinheit in diesem Fall durch das Arretierelement nicht behindert, er kann also mit relativ geringem Widerstand durchgeführt werden. Möglicherweise genügt es jedoch auch, dass das Arretierelement zumindest teilweise zwischen die beiden voneinander beabstandeten Hebelelemente hineintauchen kann.

Zum Beispiel ist in axialer Richtung der Querachse gesehen das Arretierelement bezüglich der beiden Hebelelemente zentriert angeordnet.

Außerdem ist zum Beispiel der zweite Arm zwischen den beiden Hebelelementen aufgenommen.

Nach einer Ausführungsform der Erfindung erstreckt sich das Anschlagelement in der axialen Richtung der Drehachse, wobei die Anschlagfläche des Hebels durch jeweils einen Anschlagpunkt der beiden Hebelelemente gebildet wird, wobei die Anschlagfläche und das Anschlagelement so ausgeformt sind, dass in der Warteposition beide Anschlagpunkte gemeinsam den Anschlag für das Anschlagelement bilden. Dies könnte den Vorteil haben, dass die auf den Hebel und insbesondere die Anschlagfläche wirkenden Kräfte in der Warteposition gleichmäßig verteilt sind, sodass insgesamt die mechanische Stabilität des Hebels gesteigert werden könnte. Dies könnte insbesondere dann von Relevanz sein, wenn schwergewichtige Lagereinheiten zum Einsatz kommen, welche in diesem Fall erhebliche Kräfte auf das Arretierelement bzw. den Hebel in der Warteposition ausüben.

Nach einer Ausführungsform der Erfindung sind die beiden Hebelelemente bezüglich einer Ebene senkrecht zur Drehachse spiegelbildlich zueinander geformt.

Nach einer Ausführungsform der Erfindung weist der Hebel zwei der ersten Arme auf, wobei die beiden ersten Arme auf Höhe des Querverbinders an den Hebelelementen z.B. jeweils in der axialen Richtung gesehen einander gegenüberliegend angeordnet sind. Auch dies könnte den Vorteil einer möglichst gleichmäßigen Kraftaufnahme und Kraftübertragung auf die Drehachse des Hebels bewirken, sodass auch dies eine Verkantungsgefahr und insgesamt die mechanische Stabilität des Hebels bzw. allgemein der Rückhaltesicherung maximiert.

Nach einer Ausführungsform der Erfindung umfasst das Durchlaufregal ferner eine Sperrklinke, wobei die Sperrklinke dazu ausgebildet ist, bei Bewegung der Lagereinheit in Richtung zur Aufgabeseite hin eine Sperrposition für eine weitere Bewegung der Lagereinheit in Richtung zur Aufgabenseite einzunehmen. Die Sperrklinke weist z.B. zwei Schenkel auf, wobei ein Schenkel in der Sperrposition in den Laufweg der Lagereinheiten hineinragt, sodass eine Weiterbewegung der Lagereinheit in Richtung Aufgabeseite verhindert wird. Aufgrund einer Lagerung der Sperrklinke ebenfalls um eine Drehachse kann jedoch die Sperrklinke unter die Lauffläche der Lagereinheiten abtauchen, wenn die Lagereinheit von der Aufnahmeseite kommend auf die Entnahmeseite befördert wird und auf die Sperrklinke aufweist. Zu diesem Zweck weist die Sperrklinke z.B. auf ihrer der Aufgabeseite zugewandten Seite einen schrägen Schenkel auf, welcher in im unbelasteten Zustand der Sperrklinke in Richtung zur Entnahmeseite hin in seiner Höhe zunimmt und auf welchen die Lagereinheit auflaufen kann. Beim Auflaufen erfolgt ein Hinunterdrücken und Verschwenken der Sperrklinke um ihre Achse, sodass die Bewegung von der Aufgabeseite hin zur Entnahmeseite durch die Lagereinheit fortgesetzt werden kann.

Der Abstand zwischen Rückhaltesicherung und Sperrklinke ist dabei so gewählt, dass beim Anschlag der Lagereinheit an dem in die Laufbahn hineinragenden Schenkel der Sperrklinke das der Sperrklinke gegenüberliegende Ende der Lagereinheit schwerkraftbedingt den Hebel belastet, jedoch das Arretierelement nicht mehr belastet. Dies führt dazu, dass das Arretierelement in jene Position zurückschwenken kann, in welcher das Anschlagelement an der Anschlagfläche anliegt.

In einem weiteren Aspekt betrifft die Erfindung eine Rückhaltesicherung für ein Durchlaufregal zum Kommissionieren von Lagereinheiten, welche von einer Aufgabeseite zu einer Entnahmeseite des Durchlaufregals hin auf einer geneigten Laufbahn unter Schwerkrafteinfluss bewegbar sind, wobei die Rückhaltesicherung dazu ausgebildet ist, eine der Lagereinheiten in einer Warteposition gegen eine weitere Bewegung in Richtung zur Entnahmeseite hin zu blockieren, wobei die Rückhaltesicherung einen verschwenkbaren Hebel und ein verschwenkbares Arretierelement aufweist, wobei das Arretierelement ein bezüglich des Arretierelements starres Anschlagelement und der Hebel eine bezüglich des Hebels starre Anschlagfläche für das Anschlagelement aufweist, wobei das Arretierelement und der Hebel so ausgebildet sind, dass in der Warteposition die Anschlagfläche des durch die eine Lagereinheit belasteten Hebels einen Anschlag für das Anschlagelement bildet und die Lagereinheit durch das Arretierelement in der Warteposition gegen die weitere Bewegung blockiert ist.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

Im Folgenden werden Ausführungsformen der Erfindung anhand der Zeichnungen näher erläutert. Es zeigen:
- Figur 1: eine Aufsicht auf ein schematisch dargestelltes Durchlaufregal,
- Figur 2 a)- e): einen Querschnitt einer schematischen Darstellung eines Durchlaufregals in verschiedenen Zuständen einer auf der Laufbahn gelegten Lagereinheit,
- Figur 3: eine perspektivische Ansicht eines Durchlaufregals mit Rückhaltesicherung,
- Figur 4: eine perspektivische Ansicht einer Rückhaltesicherung,
- Figur 5: eine weitere perspektivische Ansicht einer Rückhaltesicherung,
- Figur 6: eine weitere perspektivische Ansicht einer Rückhaltesicherung,
- Figur 7: eine weitere perspektivische Ansicht einer Rückhaltesicherung.

Im Folgenden werden einander ähnliche Elemente mit dem gleichen Bezugszeichen gekennzeichnet.

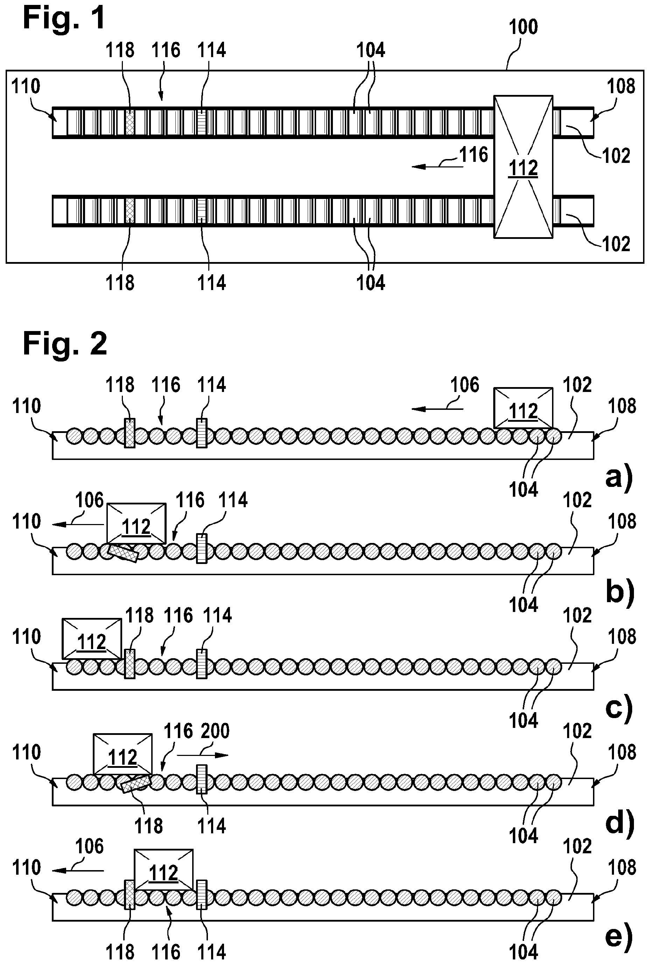

Die Figur 1 zeigt eine Aufsicht auf eine schematische Darstellung eines Durchlaufregals 100. Das Durchlaufregal weist zwei parallel zueinander verlaufende Laufbahnen 102 auf, wobei diese Laufbahnen Röllchen 104 aufweisen, auf welchen sich schwerkraftbedingt eine Lagereinheit 112 in Richtung 106 von rechts nach links auf den Laufbahnen bewegen kann. Zu diesem Zweck sind die Laufbahnen 102 leicht in Richtung von rechts oben nach links unten geneigt. Die rechte Seite der Laufbahnen ist mit Bezugszeichen 108 gekennzeichnet und ist die sogenannte Aufgabeseite des Durchlaufregals, bei welcher die Lagereinheit 112 auf die Laufbahnen aufgesetzt werden kann. Die linke Seite der Laufbahnen ist mit Bezugszeichen 110 gekennzeichnet und stellt die Entnahmeseite des Durchlaufregals dar.

Zwischen der Aufgabeseite 108 und der Entnahmeseite 110 befindet sich eine Warteposition 116, welche durch Rückhaltesicherungen 118 und Sperrklinken 114 der Laufbahnen festgelegt ist. Im Beispiel der Figur 1 wird dabei ohne Beschränkung der Allgemeinheit davon ausgegangen, dass zwei parallele Laufbahnen vorhanden sind, wobei jede der Laufbahnen eine entsprechende Rückhaltesicherung und eine zugehörige Sperrklinke aufweist. Möglich ist jedoch auch, dass im Beispiel der Figur 1 nur die obere Laufbahn 102 die Rückhaltesicherung 118 und die Sperrklinke 114 aufweist oder dass beispielsweise die obere Laufbahn 102 die Rückhaltesicherung 118 und keine Sperrklinke, hingegen die untere Laufbahn 102 keine Rückhaltesicherung 118 und dafür die Sperrklinke 114 aufweist.

In der Figur 2 ist nun eine Querschnittsansicht des Durchlaufregals der Figur 1 gezeigt, wobei hier zunächst ersichtlich ist, dass die Röllchen 104 so an der Laufbahn (bzw. den Laufbahnen) 102 angeordnet sind, dass diese mit ihrer Oberseite eine Tragfläche für die Lagereinheit 112 bilden. In dem Beispiel der Figur 2 ist die Röllchenbahn von rechts oben nach links unten leicht geneigt, sodass schwerkraftbedingt die Lagereinheit 112 in Richtung 106 selbständig rollt. Möglich ist jedoch auch, dass einzelne der Röllchen 104 motorisch angetrieben sind, um damit den Bewegungsvorgang zum Beispiel anzustoßen oder zu beschleunigen.

Die Laufbahn weist beispielsweise eine U-förmige Schiene zur Aufnahme der Röllchen, als auch der Rückhaltesicherung 118 und der Sperrklinke 114 zwischen den Schenkeln der U-Form auf.

Die Funktionsweise des Durchlaufregals wird aus der Abfolge der Zustände des Durchlaufregals beginnend in der Figur 2a hin zur Figur 2e ersichtlich. So wird in der Figur 2a die Lagereinheit auf die Röllchenbahn an der Aufgabeseite 108 aufgesetzt und rollt daraufhin schwerkraftbedingt in Richtung 106 von rechts nach links über die Röllchen hinweg. Beim Kontakt mit der Sperrklinke 114 wird diese um ihre Achse entgegen dem Uhrzeigersinn in Laufrichtung 106 gedreht, sodass die Lagereinheit 112 unbehelligt weiter in Richtung 106 rollen kann.

Ähnlich verhält es sich bezüglich der Rückhaltesicherung 118, welche in der Figur 2b ebenfalls gegen Uhrzeigerrichtung durch das Auflaufen der Lagereinheit 112 in Richtung 106 geklappt wird, sodass die Lagereinheit auch hier nahezu unbehelligt in ihren Bewegungsvorgang in Richtung 106 fortführen kann.

In Figur 2c ist der Zustand gezeigt, in welchem sich nun die Lagereinheit auf der Entnahmeseite 110 des Durchlaufregals befindet. Auf der Entnahmeseite 110 können beispielsweise verschiedene Güter von der Lagereinheit entnommen werden, welche die Lagereinheit befördert hat. Nach dem Ende des Entnahmeprozesses wird, wie in der Figur 2d gezeigt, die Lagereinheit 112 diesmal in Richtung 200, also entgegen der Richtung 106 nach rechts verschoben. Aufgrund des Verschiebens klappt nun die Rückhaltesicherung 118 im Uhrzeigersinn in die Richtung 200 und gibt den Verschiebeweg für die Lagereinheit 112 frei. Die in den Laufweg der Lagereinheit hineinragende Sperrklinke 114 blockiert jedoch eine weitere Bewegung, welche in Richtung 200 über die Sperrklinke 114 hinausgehen könnte. Die Sperrklinke 114 bildet also nun einen Anschlag gegen eine weitere Bewegung der Lagereinheit 112 in Richtung 200. In diesem die Sperrklinke berührenden Zustand nimmt nun die Rückhaltesicherung 118 ebenfalls eine Blockierposition ein, sodass daraufhin die Lagereinheit 112, wie in der Figur 2e gezeigt, in der Warteposition 116 zwischen Sperrklinke 114 und Rückhaltesicherung 118 gefangen ist. Eine weitere Bewegung der Lagereinheit 112, insbesondere in Richtung 106, wird damit blockiert und ist nicht weiter möglich - die Lagereinheit 112 kann nun in der Warteposition 116 verharren, um schließlich durch ein entsprechendes Fördergerät aus der Warteposition 116 entfernt zu werden.

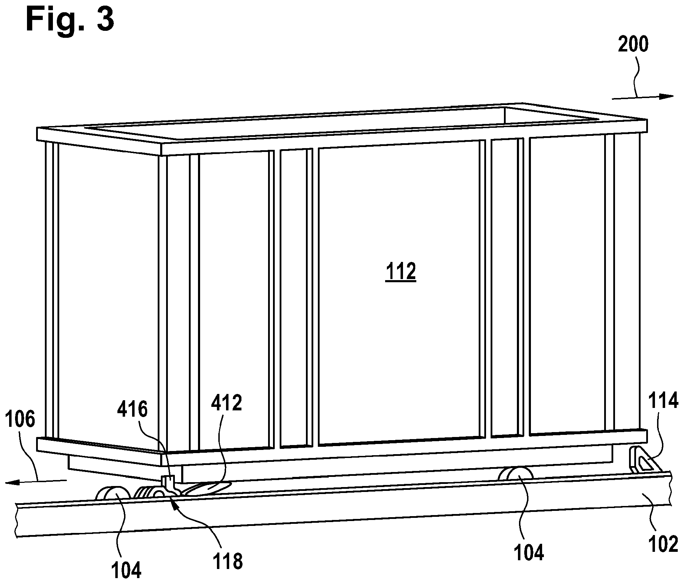

Die Figur 3 zeigt eine perspektivische Ansicht einer Lagereinheit 112 auf einer Laufschiene 112, wobei der gezeigte Zustand im Wesentlichen den Zustand der Lagereinheit in der Figur 2e darstellt. Die Rückhaltesicherung 118 hat dabei einen Zustand eingenommen, in welchem eine Bewegung der Lagereinheit 112 in Richtung 106 blockiert ist. Außerdem hat die Sperrklinke 114 eine Position eingenommen, in welcher sie mit einem senkrechten Schenkel in den Laufweg der Lagereinheit 112 hineinragt, sodass eine weitere Bewegung der Lagereinheit 112 in Richtung 200 maximal bis zu ihrem senkrechten Schenkel möglich. Eine weitere Bewegung in Richtung 200 wird durch den Schenkel blockiert.

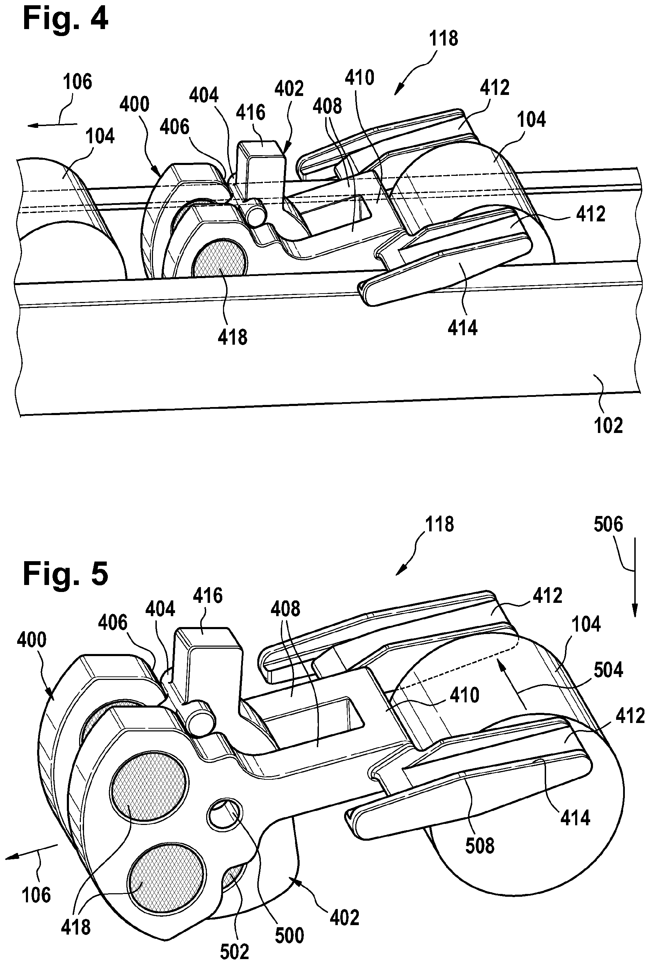

Die Figur 4 zeigt eine perspektivische Ansicht der Rückhaltesicherung in jenem Zustand, welchen die Rückhaltesicherung 118 in der Figur 3 bzw. in der Figur 2e eingenommen hat. In der Figur 4 sind ferner verschiedene Komponenten ersichtlich, welche die Rückhaltesicherung umfasst. Zunächst einmal umfasst die Rückhaltesicherung ein verschwenkbares Arretierelement 402 und einen verschwenkbaren Hebel 400. Wie in der Figur 5 ersichtlich ist, sind sowohl Arretierelement 402 als auch Hebel 400 um eine gemeinsame Achse 500 schwenkbar an der Laufbahn 102 gelagert. Da die Laufbahn, wie obig beschrieben, eine U-Form aufweist mit zwei senkrechten Schenkeln, ist die Achse zwischen diesen beiden Schenkeln aufgenommen. Möglich ist jedoch auch, dass die Achse anderweitig gelagert ist, zum Beispiel an einem Gestell des Durchlaufregals, welches die Laufbahn 102 trägt.

Die Rückhaltesicherung 118 weist also das Arretierelement 402 und den Hebel 400 auf, welche in einer Ausführungsform um eine gemeinsame Drehachse drehbar gelagert sind, jedoch in einer anderen Ausführungsform auch um getrennte Achsen drehbar gelagert sein können. Das Arretierelement 402 weist ein bezüglich des Arretierelements starres Anschlagelement 404 auf und der Hebel weist eine bezüglich des Hebels 400 starre Anschlagfläche 406 für das Anschlagelement 404 auf. In der in Figur 4 gezeigten Warteposition bildet also die Anschlagfläche 406 einen Anschlag für das Anschlagelement 404, sodass bei fixiertem Hebel ein Arm 416 des Arretierelements und damit auch das gesamte Arretierelement nicht weiter in Gegenuhrzeigersinn in Richtung 106 rotieren kann.

Der Hebel 400 ist in der Warteposition schwerkraftbedingt nach unten, das heißt in Richtung Laufbahn 102, durch die Lagereinheit 112 gedrückt, sodass sich die Anschlagfläche 406 hierdurch in einer festen Position befindet. Rollt nun die Lagereinheit 112 in Richtung 106 auf den Arm 416 des Arretierelements 402 auf, so kann sich das Arretierelement 402 mit seinem Anschlagelement 404 maximal bis zur Anschlagfläche 406 bewegen, das heißt um seine Achse nur so weit rotieren, bis die Anschlagfläche 406 den Anschlag für das Anschlagelement 404 bildet. Eine weitere Bewegung der Lagereinheit 112 in Richtung 106 ist somit blockiert und die Lagereinheit kann ihre Warteposition 116 bezüglich des Durchlaufregals einnehmen.

Der Hebel 400 weist zwei über die Drehachse 500 miteinander verbundene und in Richtung 504 (axiale Richtung) voneinander beabstandete Hebelelemente 408 auf. Diese beiden Hebelelemente sind wiederum über einen Querverbinder 410 an einer von der Drehachse 500 beabstandeten Position miteinander starr verbunden. Seitlich, das heißt in Richtung 504 gesehen, ist an den beiden Hebelelementen 408 jeweils auf Höhe des Querverbinders 410 ein Arm 412 angeordnet. Die Arme 412 weisen dabei jeweils eine rampenförmige Kante 414 auf, welche in ihrer Höhe von ihrem der Achse 500 abgewandten Ende in Richtung zur Achse bis zu einem Scheitelpunkt 508 zunimmt, um daraufhin in der Höhe weiter fortfahrend in Richtung Achse 500 wieder abzunehmen. Insbesondere das Zunehmen der Höhe, vereinfacht ein Auflaufen der Lagereinheit 112 bei einer Bewegung entgegen der Richtung 106, das heißt in Richtung 200.

Die beiden Arme 412 sind seitlich in axialer Richtung 504 gesehen von jener Laufrolle 104 beabstandet, welcher unmittelbar in Richtung 200 zur Rückhaltesicherung 118 angeordnet ist. In der Warteposition führt dies dazu, dass die in Richtung 506 wirkende schwerkraftbedingte Last der Lagereinheit 112 maßgeblich von dem Röllchen 104 und nicht etwa vom Hebel 400 aufgenommen ist.

Es sei angemerkt, dass in den Figuren 4 und 5 die Anschlagfläche 406 und das Anschlagelement 404 auf der Oberseite, das heißt auf der in Richtung Lagereinheit 112 zugewandten Seite gezeigt sind. Es ist jedoch genauso möglich, dass sowohl Anschlagfläche 406 als auch Anschlagelement 404 auf der Unterseite des Hebels bzw. des Arretierelements angeordnet sind.

In dem Beispiel der Figuren 4 und 5 erstreckt sich das Anschlagelement 404 in axialer Richtung, das heißt in Richtung 504 in Form eines Zylinders, wobei die Richtung 504 die Richtung der Zylinderachse darstellt. Dies führt dazu, dass in der Warteposition das Anschlagelement 404 an den Anschlagflächen 406 beider Hebelelemente gleichzeitig 408 anliegt, sodass insgesamt eine symmetrische Belastung der Hebelelemente und damit insgesamt der Rückhaltesicherung gegeben ist.

Das Arretierelement 404 ist symmetrisch zwischen den beiden Hebelelementen 408 aufgenommen.

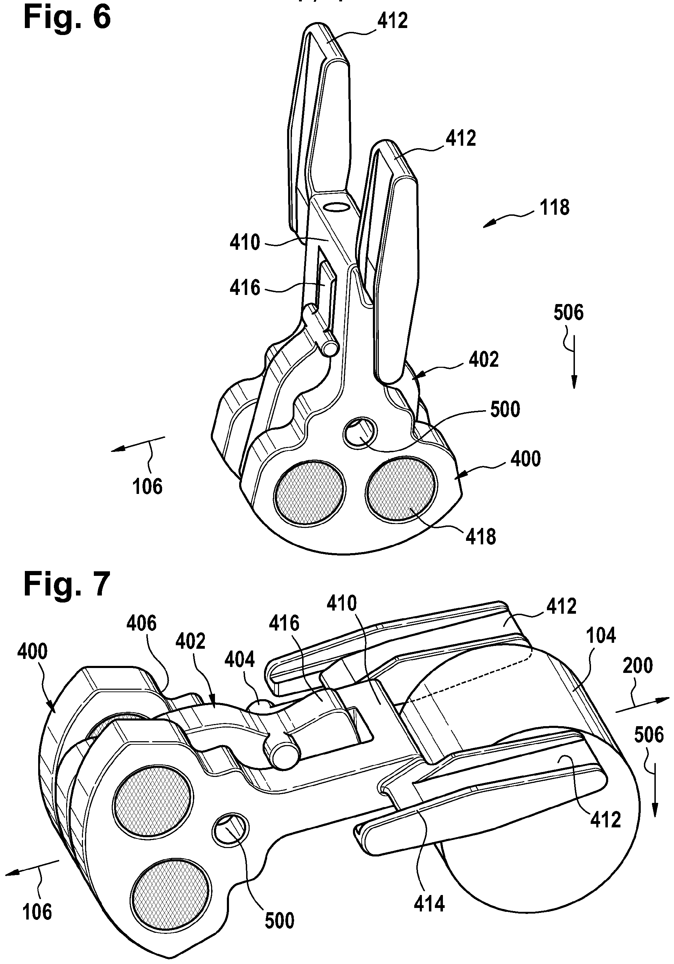

In der Figur 6 ist das Arretierelement 118 in einem Zustand gezeigt, wie es beispielsweise den Zustand der Figuren 2a und 2c entspricht. Sowohl die beiden Arme 412 des Hebels 400 als auch der Arm 416 des Arretierelements 402 weisen nach oben, das heißt entgegen die Schwerkraftrichtung 506. Grund ist, dass an den Hebelelementen 408 angeordnete Gewichte 418, als auch ein am Arretierelement 402 angeordnetes Gewicht 502 dafür sorgen, dass schwerkraftbedingt sowohl der Hebel als auch das Arretierelement um die Achse 500 so weit rotieren, bis die Gewichte 408, 418 bzw. 500 schwerkraftbedingt unten zu liegen kommen, das heißt die Arme 412 bzw. der Arm 416 nach oben zeigen. Obwohl in den Figuren 5 und 6 bezüglich eines einzelnen Hebelelementes zwei Gewichte 418 gezeigt sind und bezüglich eines Arretierelements ein Gewicht 502 gezeigt ist, ist es auch möglich, die Anzahl der Gewichte in entsprechender Weise zu variieren.

Die Figur 7 gibt die Lage des Arretierelements wieder, wie sie dem Zustand entspricht, der in der Figur 2d angedeutet ist. In der Figur 2d sind sowohl Hebel 400 als auch Arretierelement 402 schwerkraftbedingt in Richtung 506 nach unten in Richtung Laufbahn gedrückt. Dadurch ist es der Lagereinheit 112 möglich, über die Arme 416 bzw. 412 hinweg in Richtung 200 bewegt zu werden.

Sowohl in der Figur 6 als auch in der Figur 7 ist erkennbar, dass das zwischen den beiden Hebelelementen 408 zentriert aufgenommene Arretierelement 402 eine Armlänge des Arms 416 dergestalt aufweist, dass in den Figuren 6 und 7 gezeigten Zuständen der Arm 416 teilweise zwischen die beiden Hebelelemente eintauchen kann. Der Querverbinder 410 ist also soweit von der Achse 500 beabstandet, dass der Arm 416 ungehindert in das durch die beiden Hebelelemente 408 und den Querverbinder 410 gebildete U hineintauchen kann. Sobald in dem Beispiel der Figur 7 die Lagereinheit 112 den Arm 416 überfahren hat und diesen also nicht mehr in Richtung 506 schwerkraftbedingt belastet, wird der Arm 416 durch eine Rotation des Arretierelements 402 in Richtung des Gegenuhrzeigersinns wieder aufgerichtet, sodass daraufhin das Anschlagelement 404 in Richtung auf die Anschlagfläche (im speziellen Fall der Figur 7 auf die beiden Anschlagflächen 406) rotiert wird und dort einen Anschlag findet. Nach wie vor werden allerdings die beiden Arme 412 durch die Lagereinheit in Richtung 506 mit einer Kraft beaufschlagt, sodass sich insgesamt der Hebel 400 nicht aufrichten kann und damit durch den Arm 416 und die beiden Arme 412 ein Sitz für die Lagereinheit 112 gebildet wird. Rutscht nun die Lagereinheit zurück in Richtung 106, wird sie an einer weiteren Bewegung der Richtung 106 durch den Arm 416 gehindert und auf den Arm 416 wirkt die durch die Lagereinheit 112 ausgeübte Hangabtriebskraft.

In dem Zustand der Figur 7 ist also die Rolle bzw. das Röllchen 104 zwischen den beiden Armen 412 angeordnet und die beiden Arme 412 können schwerkraftbedingt durch die Lagereinheit bis in die Ebene des Röllchens 104 und damit bis unter die Laufebene des Durchlaufregals hinuntergedrückt werden. Die Last der Lagereinheit 112 wird somit auch im unmittelbaren Bereich der Rückhaltesicherung 118 durch das Röllchen 104 getragen. Es sei an dieser Stelle darauf verwiesen, dass dieses Prinzip des Tragens der Last der Lagereinheit 112 durch das unmittelbar an die Rückhaltesicherung 118 angrenzende Röllchen sowohl in Richtung zur Aufnahmeseite 108 als auch in Richtung zur Entnahmeseite 110 gilt. Aus diesem Grund ist beispielsweise in der Figur 4 sowohl ein Röllchen links als auch ein Röllchen rechts von der Rückhaltesicherung 118 gezeigt.

### Bezugszeichenliste

- 100: Durchlaufregal
- 102: Laufbahn
- 104: Rollen bzw. Röllchen
- 106: Laufrichtung
- 108: Aufgabeseite
- 110: Entnahmeseite
- 112: Lagereinheit
- 114: Sperrklinke
- 116: Warteposition
- 118: Rückhaltesicherung
- 200: Laufrichtung
- 400: Hebel
- 402: Arretierelement
- 404: Anschlagelement
- 406: Anschlagfläche
- 408: Hebelelement
- 410: Querverbinder
- 412: Arm
- 414: Rampe
- 416: Arm
- 418: Gewicht
- 500: Drehachse
- 502: Gewicht
- 504: axiale Richtung
- 506: Schwerkraftrichtung
- 508: Scheitelpunkt

## Patentansprüche

1. Durchlaufregal (100) zum Kommissionieren von Lagereinheiten (112), wobei das Durchlaufregal (100) aufweist:
- Eine von einer Aufgabeseite (108) zur einer Entnahmeseite (110) des Durchlaufregals hin geneigte Laufbahn (102) für die Lagereinheiten (112), wobei die Laufbahn (102) dazu ausgebildet ist, dass sich unter Schwerkrafteinfluss die Lagereinheiten (112) auf der Laufbahn (102) zur Entnahmeseite (110) hin bewegen,
- Eine Rückhaltesicherung (118), durch die eine der Lagereinheiten (112) in einer Warteposition (116) gegen eine weitere Bewegung in Richtung zur Entnahmeseite (110) hin blockierbar ist, wobei die Rückhaltesicherung (118) einen verschwenkbaren Hebel (400) und ein verschwenkbares Arretierelement (402) aufweist, wobei das Arretierelement (402) ein bezüglich des Arretierelements (402) starres Anschlagelement (404) und der Hebel (400) eine bezüglich des Hebels (400) starre Anschlagfläche (406) für das Anschlagelement (404) aufweist, wobei das Arretierelement (402) und der Hebel (400) so ausgebildet sind, dass in der Warteposition (116) die Anschlagfläche (406) des durch die eine Lagereinheit (112) belasteten Hebels (400) einen Anschlag für das Anschlagelement (404) bildet und die Lagereinheit (112) durch das Arretierelement (402) in der Warteposition (116) gegen die weitere Bewegung blockiert ist.

2. Durchlaufregal (100) nach Anspruch 1, wobei das Durchlaufregal (100) ferner aufweist:
- ein erstes Rückstellelement (418) für den Hebel, wobei das erste Rückstellelement (418) dazu ausgebildet ist, den Hebel (400) im unbelasteten Zustand in eine Position zu verschwenken, in welcher der Hebel (400) in den durch die Laufbahn (102) definierten Laufweg der auf der Laufbahn (102) bewegbaren Lagereinheiten (112) hineinragt,
- ein zweites Rückstellelement (502) für das Arretierelement, wobei das zweite Rückstellelement (502) dazu ausgebildet ist, das Arretierelement (402) im unbelasteten Zustand in eine Position zu verschwenken, in welcher das Arretierelement (402) in den durch die Laufbahn (102) definierten Laufweg der auf der Laufbahn (102) bewegbaren Lagereinheiten (112) hineinragt.

3. Durchlaufregal (100) nach Anspruch 2, wobei
- das erste Rückstellelement (418) ein Gewicht zum schwerkraftbedingten Verschwenken des Hebels (400) oder eine Feder zum Verschwenken des Hebels (400) in die Position umfasst, in welcher der Hebel (400) in den durch die Laufbahn (102) definierten Laufweg der auf der Laufbahn (102) bewegbaren Lagereinheiten (112) hineinragt,
- das zweite Rückstellelement (502) ein Gewicht zum schwerkraftbedingten Verschwenken des Arretierelements (402) oder eine Feder zum Verschwenken des Arretierelements (402) in die Position umfasst, in welcher das Arretierelement (402) in den durch die Laufbahn (102) definierten Laufweg der auf der Laufbahn (102) bewegbaren Lagereinheiten (112) hineinragt.

4. Durchlaufregal (100) nach Anspruch 3, wobei das zweite Rückstellelement (502) eine zwischen dem Hebel (400) und dem Arretierelement (402) angeordnete Feder umfasst.

5. Durchlaufregal (100) nach einem der vorigen Ansprüche 2-4, wobei der Hebel (400) und das Arretierelement (402) aus der Position, in welcher sie in den Laufweg hineinragen, durch die in Richtung (106) der Entnahmeseite (110) hin bewegte Lagereinheit (112) in eine Position verschwenkbar sind, in welcher der Laufweg in Richtung (106) zur Entnahmeseite (110) hin für die Lagereinheit (112) freigegeben ist.

6. Durchlaufregal (100) nach einem der vorigen Ansprüche, wobei der Hebel (400) und das Arretierelement (402) jeweils um eine ortsfeste gemeinsame Drehachse (500) verschwenkbar sind.

7. Durchlaufregal (100) nach einem der vorigen Ansprüche, wobei das Arretierelement (402) dazu ausgebildet ist,
- in der Warteposition (116) der Lagereinheit (112) eine Blockierstellung gegen die weitere Bewegung der Lagereinheit (112) in Richtung der Entnahmeseite (110) einzunehmen,
- im Zustand des durch die eine Lagereinheit (112) belasteten Hebels (400) von einer Freigabeposition in die Blockierstellung zu schwenken, wobei in der Freigabeposition eine Bewegung der Lagereinheit (112) in Richtung zur Aufgabeseite (108) hin durch das Arretierelement (402) freigegeben ist.

8. Durchlaufregal (100) nach einem der vorigen Ansprüche, wobei in einem Zustand des durch die eine Lagereinheit (112) schwerkraftbedingt in Richtung der Schwerkraft belasteten Hebels (400) und Arretierelements (402) in der Erstreckungsrichtung der Laufbahn (102) in Richtung der Aufgabeseite (108) gesehen der Hebel (400) länger ist als das Arretierelement.

9. Durchlaufregal (100) nach einem der vorigen Ansprüche, wobei der Hebel (400) einen ersten Arm (412) und das Arretierelement (402) einen zweiten Arm (416) aufweist, wobei das Arretierelement (402) und der Hebel (400) so ausgebildet sind, dass in der Warteposition (116)
- der erste Arm (412) in Richtung (506) der Schwerkraft durch die eine Lagereinheit (112) belastet ist,
- der zweite Arm (416) in Richtung einer Hangabtriebskraft durch die eine Lagereinheit (112) belastet ist.

10. Durchlaufregal (100) nach Anspruch 9, wobei in der Warteposition (116) der erste Arm (412) und der zweite Arm (416) in einem vordefinierten Winkel größer als 45 Grad aufeinander stehen.

11. Durchlaufregal (100) nach Anspruch 9, wobei in der Warteposition (116) der erste Arm (412) und der zweite Arm (416) eine L-Form bilden.

12. Durchlaufregal (100) nach einem der Ansprüche 9-11, wobei die Laufbahn (102) zumindest unmittelbar an die Rückhaltesicherung (118) angrenzende Laufrollen (104) zum Tragen und befördern der Lagereinheit (112) aufweist, wobei der Hebel (400) um eine Achse verschwenkbar ist, wobei in der Richtung (504) der Achse in der Warteposition (116) gesehen der erste Arm (412) seitlich beabstandet zu den Laufrollen (104) ist.

13. Durchlaufregal (100) nach einem der Ansprüche 9-12, wobei der Hebel (400) um eine Drehachse (500) verschwenkbar ist, wobei der erste Arm (412) in der Warteposition (116) gesehen in der Erstreckungsrichtung der Laufbahn (102) eine Auflauframpe aufweist, wobei die Höhe der Rampe in der Erstreckungsrichtung der Laufbahn (102) gesehen von der Drehachse (500) wegweisend zunimmt.

14. Durchlaufregal (100) nach einem der vorigen Ansprüche, wobei der Hebel (400) um eine Drehachse (500) verschwenkbar ist, wobei der Hebel (400) zwei über die Drehachse (500) miteinander verbundene und voneinander beabstandete Hebelelemente (408) umfasst, wobei die Hebelelemente (408) in axialer Richtung der Drehachse (500) gesehen zusammen zentriert zur Laufbahn (102) angeordnet sind und an einer von der Drehachse (500) senkrecht beabstandeten Position miteinander starr über einen Querverbinder (410) miteinander verbunden sind.

15. Durchlaufregal (100) nach Anspruch 14, wobei im Zustand des in Schwerkraftrichtung belasteten Hebels (400) und Arretierelements (402) in der Erstreckungsrichtung der Laufbahn (102) in Richtung (200) zur Aufgabeseite (108) gesehen die Erstreckung des Arretierelements (402) vor dem Querverbinder (410) endet.

16. Durchlaufregal (100) nach Anspruch 14 oder 15, wobei in axialer Richtung der Drehachse (500) gesehen das Arretierelement (402) bezüglich der beiden Hebelelemente (408) zentriert angeordnet ist.

17. Durchlaufregal (100) nach einem der vorigen Ansprüche 9-16, wobei der zweite Arm (416) zwischen den beiden Hebelelementen(408) aufgenommen ist.

18. Durchlaufregal (100) nach einem der vorigen Ansprüche 14-17, wobei sich das Anschlagelement (404) in der axialen Richtung der Drehachse (500) erstreckt, wobei die Anschlagfläche (406) des Hebels (400) durch jeweils einen Anschlagpunkt der beiden Hebelelemente (408) gebildet wird, wobei die Anschlagfläche (406) und das Anschlagelement (404) so ausgeformt sind, dass in der Warteposition (116) beide Anschlagpunkte gemeinsam den Anschlag für das Anschlagelement (404) bilden.

19. Durchlaufregal (100) nach einem der vorigen Ansprüche 14-18, wobei die beiden Hebelelemente (408) bezüglich einer Ebene senkrecht zur Drehachse (500) spiegelbildlich zueinander geformt sind.

20. Durchlaufregal (100) nach einem der vorigen Ansprüche 9-19, wobei der Hebel (400) zwei der ersten Arme (412) aufweist, wobei die ersten Arme (412) auf Höhe des Querverbinders an den Hebelelementen (408) angeordnet sind.

21. Durchlaufregal (100) nach einem der vorigen Ansprüche, ferner mit einer Sperrklinke (114), wobei die Sperrklinke (114) dazu ausgebildet ist, bei Bewegung der Lagereinheit (112) in Richtung zur Aufgabeseite (108) eine Sperrposition für eine weitere Bewegung der Lagereinheit (112) in Richtung zur Aufgabeseite (108) einzunehmen.

22. Rückhaltesicherung (118) für ein Durchlaufregal (100) zum Kommissionieren von Lagereinheiten (112), welche von einer Aufgabeseite (108) zur einer Entnahmeseite (110) des Durchlaufregals (100) hin auf einer geneigten Laufbahn (102) unter Schwerkrafteinfluss bewegbar sind, wobei die Rückhaltesicherung (118) dazu ausgebildet ist, eine der Lagereinheiten (112) in einer Warteposition (116) gegen eine weitere Bewegung in Richtung zur Entnahmeseite (110) hin zu blockieren, wobei die Rückhaltesicherung (118) einen verschwenkbaren Hebel (400) und ein verschwenkbares Arretierelement (402) aufweist, wobei das Arretierelement (402) ein bezüglich des Arretierelements (402) starres Anschlagelement (404) und der Hebel (400) eine bezüglich des Hebels (400) starre Anschlagfläche (406) für das Anschlagelement (404) aufweist, wobei das Arretierelement (402) und der Hebel (400) so ausgebildet sind, dass in der Warteposition (116) die Anschlagfläche (406) des durch die eine Lagereinheit (112) belasteten Hebels (400) einen Anschlag für das Anschlagelement (404) bildet und die Lagereinheit (112) durch das Arretierelement (402) in der Warteposition (116) gegen die weitere Bewegung blockiert ist.
